# EUROPEAN PATENT APPLICATION

(11) **EP 2 031 863 A1**
(43) Date of publication of application: **04.03.2009**
(21) Application number: 08103024.9
(22) Date of filing: 27.03.2008
(51) Int. Cl.: H04N 5/225

(54) **Monitoring camera**

(30) Priority: 29.08.2007 KR 20070087093
(71) Applicant: Samsung Electronics Co., Ltd, Suwon-si, Gyeonggi-do 442-742 (KR)
(72) Inventor: Kim, Jai-woo, Gyeonggi-do (KR)
(74) Representative: Hewett, Jonathan Michael Richard

(57) **Abstract**

A monitoring camera capable of preventing light interference from occurring in a capturing unit due to light diffusely reflected from a covering member. The monitoring camera can include an image capturing unit; a lighting unit to emit light in a capturing direction of the capturing unit and to illuminate a monitoring area; a covering member to cover the capturing unit and the lighting unit; and a light guide unit, mounted in the capturing unit, to guide the light diffusely reflected from the covering member so the light does not enter the capturing unit.

## Description

The present invention relates to a monitoring camera, and particularly, but not exclusively, to a monitoring camera which may be employed in a closed-circuit television (CCTV) system.

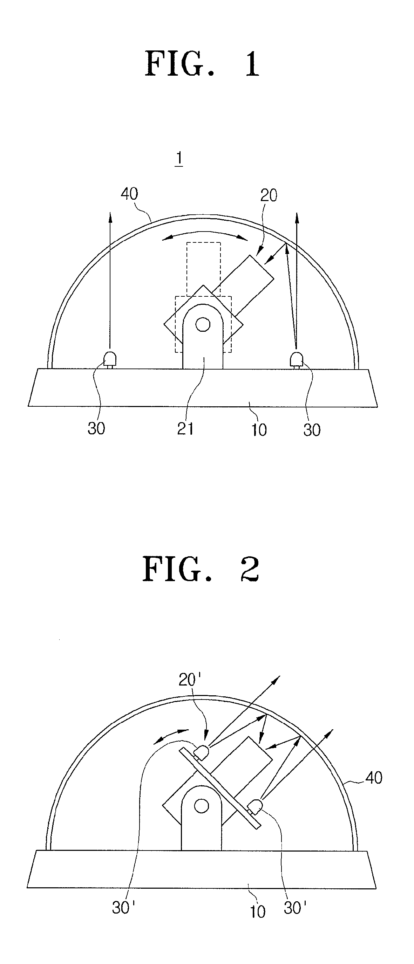

Monitoring cameras are generally used in closed-circuit television (CCTV) systems. Monitoring cameras may be installed in various locations, including homes, department stores, banks, exhibition halls, factories, and other places where monitoring is required. Mounted monitoring cameras continue to capture images, and transmit the captured images to monitors installed in offices. Figure 1 shows a conventional monitoring camera 1.

The monitoring camera 1 of Figure 1 includes a main body 10, a capturing unit 20 mounted on the main body 10, a lighting unit 30 to generate light, and a covering member 40 having a dome shape to cover the capturing unit 20 and the lighting unit 30.

The capturing unit 20 is rotatably mounted in the main body 10 about a support shaft 21, and a capturing direction thereof is adjusted by a user or worker. The lighting unit 30 is mounted adjacent to the capturing unit 20 in order to increase the illuminance and obtain clean images at night.

As illustrated in Figure 1, since the lighting unit 30 is fixed onto the main body 10, it is difficult for the light emitting unit 30 to emit light in many directions corresponding to the capturing direction of the capturing unit 20. Additionally, the light emitted from the lighting unit 30 is diffusely reflected from an inner surface of the covering member 40, and enters the capturing unit 20, thus interfering with the operation of the capturing unit 20.

In order to solve problems such as the difficulty of changing the direction of light emitted according to the capturing direction of the capturing unit 20, a lighting unit 30' may be formed integrally with a capturing unit 20', as illustrated in Figure 2.

However, the light is diffusely reflected from the inner surface of the covering member 40 and enters the capturing unit 20' even when the lighting unit 30' is formed integrally with the capturing unit 20', so the light from the light emitting unit 30' may also interfere with the capturing unit 20'.

Embodiments of the present invention provide a monitoring camera capable of preventing light interference from occurring in an image capturing unit due to light diffusely reflected from a covering member.

Additional aspects and utilities of the present invention will be set forth in part in the description which follows and, in part, will be obvious from the description, or may be learned by practice of the invention.

The foregoing and/or other aspects and utilities of the present invention may be achieved by providing a monitoring camera including an image capturing unit; a lighting unit to emit light in a capturing direction of the image capturing unit and to illuminate a monitoring area; a covering member to cover the image capturing unit and the lighting unit; and a light guide unit, mounted in the image capturing unit, to guide the light diffusely reflected from the covering member so the light does not enter the image capturing unit.

The light guide unit may have a stepped reflective surface to guide the light diffusely reflected from the covering member in the image capturing direction.

The reflective surface may be inclined at a predetermined angle.

The capturing unit may include a lens module; a board on which the lens module is mounted; and a rotating member to rotatably support the board with respect to a main body of the camera.

The lighting unit may include a plurality of light emitting members mounted around the lens module on the board.

The light emitting members may be light emitting diodes (LEDs).

The light guide unit may be mounted on the board, enclose the lens module and lighting unit, and may include a reflecting member including the reflective surface.

The covering member may have a dome shape, and the reflecting member may have a dome shape with the same curvature as the covering member.

A circumference of the reflecting member may be inclined at a predetermined angle in order to prevent the reflecting member from colliding with the main body.

The reflecting member may include a first exposure hole and a plurality of second exposure holes to expose the lens module and the light emitting members, respectively.

The first exposure hole and plurality of second exposure holes may penetrate the reflecting member.

The light guide unit may include a sealing member mounted between the covering member and the reflecting member to prevent the light from entering the first exposure hole.

The reflecting member may be made of non-transparent material.

The foregoing and/or other aspects and utilities of the present invention may be achieved by providing a monitoring camera, including: an image capturing unit; a lighting unit to emit light in a capturing direction of the image capturing unit and to illuminate a monitoring area; and a light dissipating unit mounted on the image capturing unit and to dissipate any light including the emitted light before entering into the capturing unit.

The light dissipating unit can dissipate light that reflects from a covering member that covers the image capturing unit.

The image capturing unit can include a lens module; a board on which the lens module is mounted; and a rotating member to rotatably support the board with respect to a main body of the camera.

The light dissipating unit can surround the lens module and lighting unit, and comprises a stepped reflecting surface to reflect light in a plurality of outwardly directions to dissipate light including the light reflected from the covering member.

The above aspects and utilities of the present invention will be more apparent by describing certain embodiments of the present invention with reference to the accompanying drawings, in which:
Figures 1 and 2 are cross sectional views schematically illustrating a conventional monitoring camera;
Figure 3 is a cross sectional view schematically illustrating a monitoring camera according to an embodiment of the present invention;
Figure 4 is an exploded perspective view schematically illustrating the monitoring camera of Figure 3; and
Figure 5 is an enlarged view illustrating an area E of Figure 3.

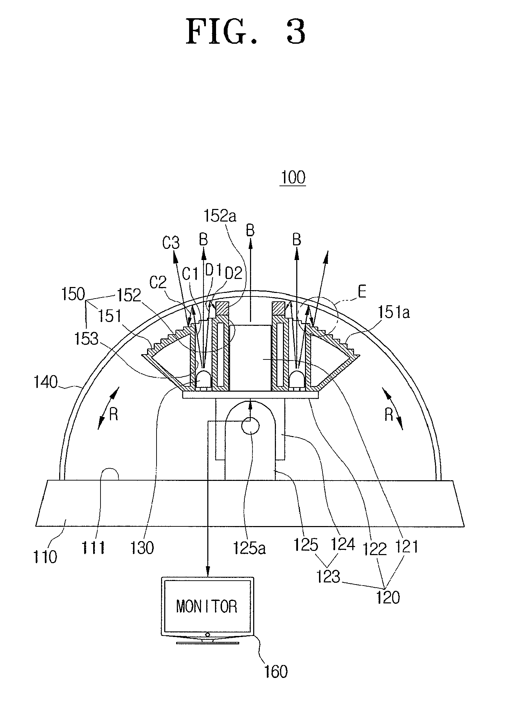

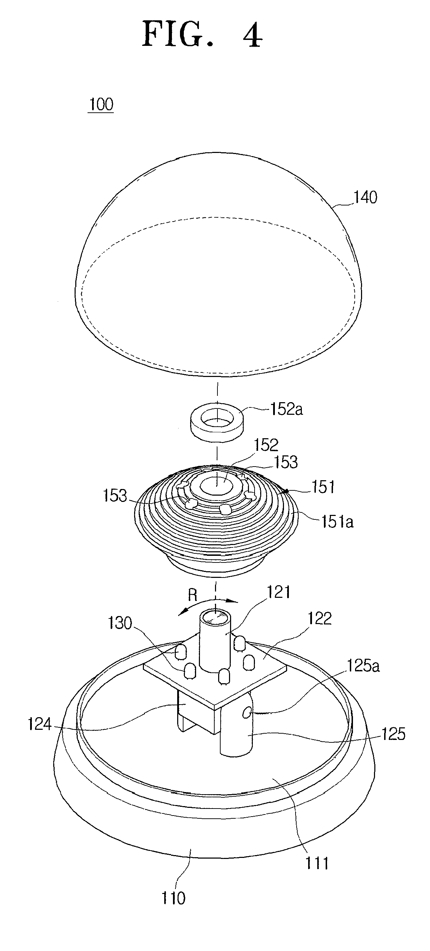

Referring Figures 3 and 4, a monitoring camera 100 according to an embodiment of the present invention includes a main body 110, an image capturing unit 120, a lighting unit 130, a covering member 140 and a light guide unit 150.

The image capturing unit 120 is rotatably mounted on a base 111 of the main body 110, to capture an image of a monitoring area where monitoring is required. The image capturing unit 120 includes a lens module 121, a board 122 and a rotating member 123.

The lens module 121 can capture a predetermined image, that is, an image of an area which a user desires to monitor. The lens module 121 can be a charged coupled device (CCD) module to convert an optical image into an electrical signal.

The lens module 121 can be mounted on the board 122. Specifically, the board 122 can be a controlling board, which is electrically connected to the lens module 121. The board 122 can transmit the electrical signal corresponding to the monitoring area received from the lens module 121 to a display device, for example a monitor 160, as illustrated in Figure 3.

The rotating member 123 can support the board 122 so that the board 122 may rotate about the main body 110. The rotating member 123 includes a support unit 124 to support the board 122, and a rotating unit 125, which is connected to both ends of the support unit 124 through a rotation axis 125a and mounted on the main body 110.

Accordingly, the lens module 121 mounted on the board 122 can pivot about the rotation axis 125a in direction R illustrated in Figures 3 and 4. In this situation, a rotation range of the capturing unit 120 may be set when the capturing unit 120 is initially mounted, or may be controlled by signal exchange between the capturing unit 120 and a separate controlling means (not illustrated).

The lighting unit 130 can be supported by the capturing unit 120, and can emit light in a capturing direction B of the capturing unit 120 to illuminate the monitoring area. As illustrated in Figure 4, the lighting unit 130 can include a plurality of light emitting members spaced apart at predetermined distances on the board 122 around the lens module 121 in order to enclose the lens module 121.

At night, when there is little illumination, the lighting unit 130 may selectively emit light so that the lens module 121 can capture a clean image. To achieve this, the lighting unit 130 can emit light by exchanging signals with a separate timer (not illustrated) or an illumination detecting sensor (not illustrated) which is mounted on the board 122, although not illustrated.

The light emitting members of the lighting unit 130 can be either light emitting diodes (LEDs) or light emitting devices to provide communication, such as semiconductor lasers. In this embodiment of the present invention, LEDs can be mounted as the light emitting members on the board 122.

The technical configuration of the lens module 121 and lighting unit 130 according to the present invention may be implemented using the conventional art, so detailed description and illumination thereof are omitted herein.

The covering member 140 can cover the image capturing unit 120 and lighting unit 130. The covering member 140 can have a dome shape, and can be fixed onto the main body 110. The covering member 140 can be made of a transparent or semitransparent material, such as acrylic material, through which light can be transmitted.

The light guide unit 150 can allow light diffusely reflected from an inner surface of the covering member 140 to move in the capturing direction. To achieve this, the light guide unit 150 includes a reflecting member 151, a first exposure hole 152 and a plurality of second exposure holes 153. The light guide unit 150 can be mounted on the board 122 so that the light guide unit 150 faces the covering member 140.

The reflecting member 151 can be mounted on the board 122 to face the inner surface of the covering member 140. The reflecting member 151 can have a dome shape with the same or similar curvature as the dome-shaped covering member 140.

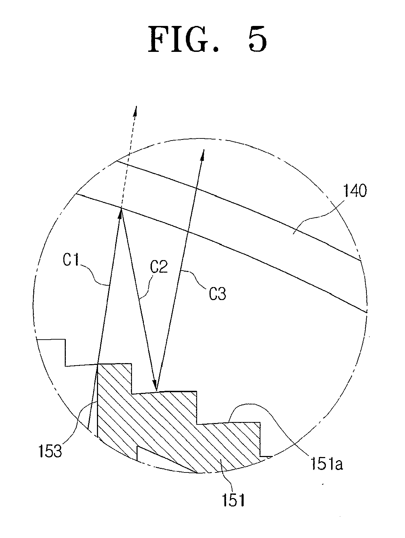

A reflective surface 151a can be formed with radially stepped portions on an outer surface of the reflecting member 151 so that the reflecting member 151 can reflect the light diffusely reflected from the inner surface of the covering member 140 in the capturing direction B. In more detail, as illustrated in Figures 3 and 5, the reflective surface 151a can again reflect the light that has been emitted in a direction C1 and then diffusely reflected in a direction C2 from the inner surface of the covering member 140, which is inclined at a predetermined curvature, in a direction C3, instead of reflecting the light in the capturing direction B, so that the light may be guided outwardly. Alternatively, the reflective surface 151a may be inclined at a predetermined angle to cause the light to move in the capturing direction B.

A circumference of the reflecting member 151 may be inclined in order to prevent the reflecting member 151 from colliding with the main body 110, namely, with the base 111 on which the rotating unit 125 is mounted, when rotating in the direction R.

The first exposure hole 152 may penetrate the reflecting member 151, so that the lens module 121 may be inserted into the first exposure hole 152, and thus be exposed. In this situation, the lens module 121 may be mounted in the substantial center of the board 122, so the first exposure hole 152 may also penetrate the substantial center of the reflecting member 151.

The plurality of second exposure holes 153 may penetrate the reflecting member 151, so that the lighting unit 130 can be inserted into the second exposure holes 153, and thus be exposed. In this situation, the plurality of second exposure holes 153 may be formed around the first exposure hole 152 in positions corresponding to positions in which the light emitting members of the lighting unit 130 are mounted.

The reflecting member 151 may be made of non-transparent material through which light cannot be transmitted. Accordingly, light can permeate only through the first exposure hole 152 and second exposure holes 153 of the reflecting member 151.

A sealing member 152a may be mounted between the reflecting member 151 and the covering member 140, to enclose a circumference of the first exposure hole 152. The sealing member 152a may prevent the light emitted from the lighting unit 130 in direction D1 and diffusely reflected from the inner surface of the covering member 140 in direction D2 from entering the first exposure hole 152, as illustrated in Figure 3.

The thickness of the sealing member 152a may be determined to be within a range in which it is possible to prevent the light emitted from the lighting unit 130 or reflected thereafter from entering the first exposure hole 152, taking into consideration a distance between the reflecting member 151 and the covering member 140.

An operation by which the monitoring camera 100 guides light will be described with reference to Figures 3 and 5.

Referring to Figure 3, if the lens module 121 of the image capturing unit 120 captures the image of the monitoring area in direction B facing the monitoring area, the captured image may be transmitted to the monitor 160 installed in an office or other location.

At night or other situations when there is little illumination, the lighting unit 130 can emit light in the capturing direction B by exchanging signals with a separate timer (not illustrated) or an illumination detecting sensor (not illustrated).

In this situation, if the light emitted from the lighting unit 130 is unable to penetrate the covering member 140 and is diffusely reflected from the inner surface of the covering member 140, for example, if the light emitted from the lighting unit 130 in the direction C1 is diffusely reflected from the inner surface of the covering member 140 in the direction C2, as illustrated in Figure 5, the light reflected in the direction C2 may again be reflected in the direction C3 by the reflective surface 151a and may then be emitted outside the covering member 140.

Additionally, even if the light emitted from the lighting unit 130 in a direction D1 is reflected from the inner surface of the covering member 140 in a direction D2, as illustrated in Figure 3, it is possible to prevent the light from entering the first exposure hole 152.

Although the present invention was applied to the situation in which the light emitted from the lighting unit 130 in direction C1 or D1 and diffusely reflected from the inner surface of the covering member 140 is guided in the capturing direction B, the light may be emitted in many directions other than the capturing direction B of the image capturing unit 120 so that the light emitted from the lighting unit 130 and diffusely reflected from the inner surface of the covering member 140 may again be reflected by the reflective surface 151a of the reflecting member 151 to prevent the light from entering the lens module 121.

As described above, according to the present invention, even when light emitted from the lighting unit 130 is diffusely reflected from the covering member 140 instead of being emitted externally thereof, the light may be guided in the capturing direction by the light guide unit 150. Accordingly, the light guide unit 150 can prevent the light emitted from the lighting unit 130 from entering the capturing unit 120, so that it is possible to prevent light interference with the capturing unit 120.

Additionally, the sealing member 152a is mounted between the covering member 140 and the reflecting member 151 to enclose the first exposure hole 152, and thus light interference with the capturing unit 120 can be further prevented.

Although a few embodiments of the present invention have been illustrated and described, it will be appreciated by those skilled in the art that changes may be made in these embodiments without departing from the principles of the invention, the scope of which is defined in the appended claims.

## Claims

1. A monitoring camera, comprising:
an image capturing unit;
a lighting unit to emit light in a capturing direction of the image capturing unit and to illuminate a monitoring area; and
a light dissipating unit mounted on the image capturing unit, arranged to dissipate any light including the emitted light before entering the image capturing unit.

2. The monitoring camera as claimed in claim 1, comprising a covering member arranged to cover the image capturing unit and the lighting unit.

3. The monitoring camera as claimed in claim 2 wherein the light dissipating unit is arranged to dissipate light that reflects from the covering member.

4. The monitoring camera as claimed in claim 2 wherein the light dissipating unit comprises a light guide unit mounted to the image capturing unit, arranged to guide the emitted light which is diffusely reflected from the covering member so that light does not enter the capturing unit.

5. The monitoring camera as claimed in claim 4, wherein the light guide unit has a stepped reflective surface to guide the light diffusely reflected from the covering member in the capturing direction.

6. The monitoring camera as claimed in claim 5, wherein the reflective surface is inclined at a predetermined angle.

7. The monitoring camera as claimed in claim6, wherein the image capturing unit comprises:
a lens module;
a board on which the lens module is mounted; and
a rotating member to rotatably support the board with respect to a main body of the camera.

8. The monitoring camera as claimed in claim 7, wherein the lighting unit comprises a plurality of light emitting members mounted around the lens module on the board.

9. The monitoring camera as claimed in claim 8, wherein the light emitting members are light emitting diodes (LEDs).

10. The monitoring camera as claimed in claim 8, wherein the light guide unit is mounted on the board, encloses the lens module and lighting unit, and comprises a reflecting member comprising the reflective surface.

11. The monitoring camera as claimed in claim 10, wherein the covering member has a dome shape, and the reflecting member has a dome shape with the same curvature as the covering member.

12. The monitoring camera as claimed in claim 11, wherein a circumference of the reflecting member is inclined at a predetermined angle in order to prevent the reflecting member from colliding with the main body.

13. The monitoring camera as claimed in claim 10, wherein the reflecting member comprises a first exposure hole and a plurality of second exposure holes to expose the lens module and the light emitting members, respectively.

14. The monitoring camera as claimed in claim 13, wherein the first exposure hole and plurality of second exposure holes penetrate the reflecting member.

15. The monitoring camera as claimed in claim 14, wherein the light guide unit comprises a sealing member mounted between the covering member and the reflecting member to prevent the light from entering the first exposure hole.

16. The monitoring camera as claimed in claim 13, wherein the reflecting member is made of non-transparent material.
